# EUROPEAN PATENT APPLICATION

(11) **EP 1 545 027 A1**
(43) Date of publication of application: **22.06.2005**
(21) Application number: 03293221.2
(22) Date of filing: 18.12.2003
(51) Int. Cl.: H04B 10/10

(54) **Robot communication system**

(71) Applicant: ALCATEL, 75008 Paris (FR)
(72) Inventor: Weik, Hartmut, Dipl.-Ing., 70195 Stuttgart (DE); Weis, Bernd Xaver, Dr.-Ing., 70825 Korntal (DE)
(74) Representative: Zinsinger, Norbert

(57) **Abstract**

The invention concerns a method of establishing a communication connection between a versatile first object, in particular a robot and a versatile or fixed second object, in particular a further robot or robot control device, as well as a communication system for carrying out this method. The communication system comprises a laser communication unit (31) comprising a laser transmission unit (35) for emitting a laser beam (5) containing encoded information and a laser receiving unit (36) for receiving such laser beam. Preferably, the communication system has a phased array antenna (32) for transmitting and receiving a radio frequency based search signal. Further, the communication system has a control unit (33) for establishing communication connections, wherein the control unit (33) executes in a first step a rough matching procedure (337) performing rough adjustment of the orientation of the laser transmission and receiving units. It executes in a second step a fine matching procedure (338) performing fine adjustment of the laser transmission and receiving units by means of analyzing an output signal of the laser receiving unit (36).

## Description

The present invention relates to a method of establishing a communication connection between a versatile first object, in particular a robot, and a versatile or fixed second object, in particular a further robot or robot control device as well as an optical communication system, in particular an optical communication system installed in a robot.

Highly versatile, remote controlled robots are today used for a lot of applications. For example, they are used in airports to inspect suspect baggages or to handle hazard materials. Such remote controlled robots require a communication system satisfying high-level real time, bandwidth, safety and security requirements. Often, it is of great importance to provide a real time video-connection since any latency in the communication between the robot and the control device increases the risk of destruction of the robot.

Today, the bandwidth demands of these robots can only be met by using analogue radio frequency bands or connecting the robot through a coax cable that has to be carried by the robot itself. When using a communication based on radio frequency bands, the number of appropriate and available frequency bands is really limited, that means no robots can work in parallel. Further, it is a problem to find a transmission spectrum that does not interfere with radio frequencies allocated to other purpose due to the high bandwidth demands of these robots. Any interference would increase the risk to destruct the robot.

It is the object of the present invention to provide an improved communication system for a communication between a versatile first object and a versatile or fixed second object, in particular between a robot or a robot control device.

The object of the present invention is achieved by a method of establishing a communication connection between a versatile first object, in particular a robot, and a versatile or fixed second object, in particular a further robot or robot control device, comprising the steps of: executing in a first step a rough matching procedure performing rough adjustment of mutual orientations of a laser transmission unit and a laser receiving unit of the first and the second object; executing in a second step a fine matching procedure performing fine adjustment of the motor orientations of the laser transmission unit and the laser receiving unit by means of analyzing an output signal of the laser receiving unit; and using the laser transmission and receiving units for exchanging data encoded in a laser beam emitted by the laser transmission unit and received by the laser receiving unit. The object of the present invention is further achieved by an optical communication system for communicating between a versatile object and a versatile or fixed object, in particular an optical communication system installed in a robot, the optical communication system comprises a laser communication unit comprising a laser transmission unit for emitting a laser beam containing encoded information and a laser receiving unit for receiving such laser beam, and a control unit for establishing communication connections, wherein the control unit is adapted to execute in a first step a rough matching procedure performing a rough adjustment of the orientation of the laser transmission and receiving unit, and to execute in a second step a fine matching procedure performing fine adjustment of the laser transmission and receiving unit by means of analyzing an output signal of the laser receiving unit.

With the introduction of such free-space optical transmission system the bandwidth demands can be easily satisfied. The invention provides a fast and fail safe setup procedure for such communication connections which may be followed by permanent re-adjustment of laser beam and laser detector (in case of movement of the robot). It provides a high level of safety and security. There is no interference with radio frequencies allocated to other purpose or with radio frequencies allocated to other robots. There is no possibility for third parties to intercept the communication between the robot and the robot control device or to have an impact on the exchanged information.

Further advantages are achieved by the embodiments of the invention indicated by the dependent claims.

Preferably, the optical communication system comprises a phased array antenna. The output signal of this antenna is used by the rough matching procedure for performing a rough adjustment of the orientations of the laser transmission and receiving units. A first phased array antenna, e.g. the antenna of the control device, broadcasts a search signal in various directions and a second phased antenna, e.g. the antenna of the robot, scans for such search signal and determines the rough direction of the source of the search signal. The search signal broadcasted by the first phased array antenna includes identity information, for example the address of the searched robot and/or the own address. By means of such broadcasted information, each of the robots is in a position to decide whether it should establish a communication connection with the object constituting the source of such received search signal. It is not necessary for a robot to break down an existing communication connection before being completely sure to have to establish a communication connection with another object. It is possible for the robot to determine the rough direction of this new communication-partner before breaking down an existing communication connection. The outcome of this is a short setup-time for the establishment of a new connection. Therefore notable short setup-time may be guaranteed thanks to this approach.

But, it is also possible to use the laser transmission and receiving units for executing the rough matching procedure. E.g., a defocused laser beam is emitted in various directions and the fine matching procedure is started, as soon as the laser beam is detected by the laser receiving unit. The emitting of the defocused laser beam may follow a fixed or random search pattern. Such approach results in substantial longer set-up time, but provides a simple and cheap solution.

The communication system installed in a robot preferably comprises a laser transmission unit and a laser receiving unit which are fixed to each other. The laser communication unit comprises at least one actuator for changing the orientation of this mechanically connected transmission and receiving units. This approach provides a cheap and efficient implementation of the invention.

But, it is also possible to install the laser transmission and receiving units at different places of the robot and to have separate actuators for the laser transmission and the laser receiving units.

According to a preferred embodiment of the invention, the laser transmission unit has a laser beam focusing and defocusing unit. The control unit defocuses the laser beam at the beginning of the fine matching procedure by means of this laser beam focusing and defocusing unit. Due to the defocusing of the laser beam, the laser beam covers a wider sector and makes it thereby easier for the laser transmission unit of the other object to detect the laser beam.

Preferably, the control unit varies the direction the laser transmission and receiving units are pointing to within a sector determined by the rough matching procedure. When having detected the laser beam signal, the direction the laser transmission and receiving units are pointing to is slightly modified in order to find a maximum laser beam signal. In parallel, the laser beam is more and more focused to increase the data transmission rate. Thereby, it becomes possible to further reduce the setup-time for establishment of a communication connection and to adapt transmission rate to environmental conditions.

According to a further preferred embodiment of the invention, the laser receiving unit comprises a sleeve, a detector element movable engaged in the sleeve and an actuator for shifting this detector element within the sleeve. Such construction of the laser receiving unit makes it possible to combine a high transmission rate with fast communication connection setup. When executing the fine matching procedure, the detector element is successively shifted to the rear-end position of the sleeve which makes it possible to increase data rate. In contrast to this, the detector element receives at the front-end position the defocused laser beam even under bad alignment conditions. Thereby, the invention provides both, short setup time and high transmission rate.

These as well as other features and advantages of the invention will be better appreciated by reading the following detailed description of presently preferred exemplary embodiment taken in conjunction with accompanying drawings of which:
- Fig. 1: is a functional view of a robot control device and two robots communicating with each other.
- Fig.2: is a block diagram of a communication system according to the present invention, which is installed in one of the robots in Fig.1.

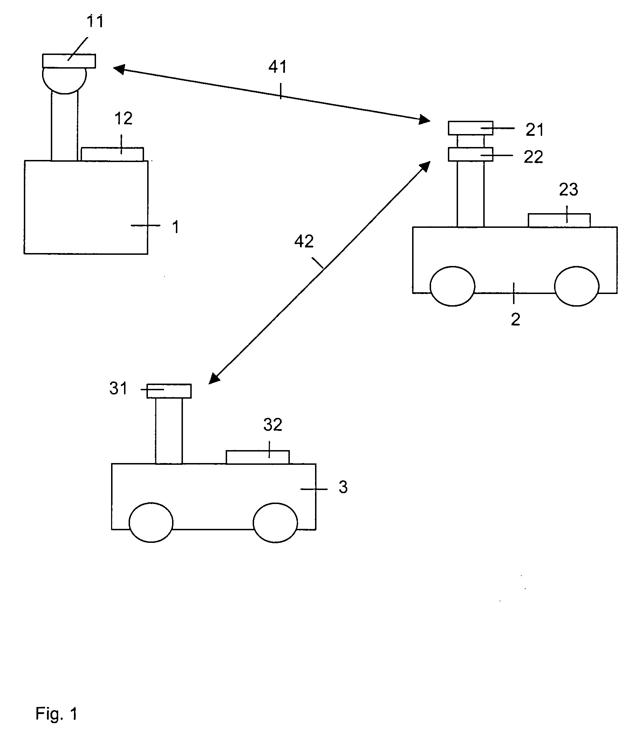

Fig. 1 shows a robot control device 1 and two robots 2 and 3.

The robots 2 and 3 comprise a drive unit and a control unit for moving in the environment. Further, the robots 2 and 3 have phased array antennas 23 and 32 and laser communication units 21, 22 and 31, respectively. As exemplary show by hand of robot 2, it is possible that a robot comprises two or more laser communication units which makes it possible for the robot to communicate with two or more other objects. As already shown by Fig. 1, the laser communication units 31, 21 and 22 are mounted at a communication mast to improve the chances to have a free space between the robots 2 and 3 and the robot control device 1.

The robot control device 1 has a laser communication unit 11, a phased array antenna 12 and (not shown) input and output means for providing a human machine interface to the operator and a control unit for generating control commands for the control of the robots 2 and 3. But, it is also possible that the robot control device 11 is a relay station connected, for example via a coax cable, with a further robot control device containing the human machine interface and a control unit for generating the control commands.

The details of the communication system implemented in the robot control device 1, the robot 2 and the robot 3 are described in the following by help of the communication system of the robot 3.

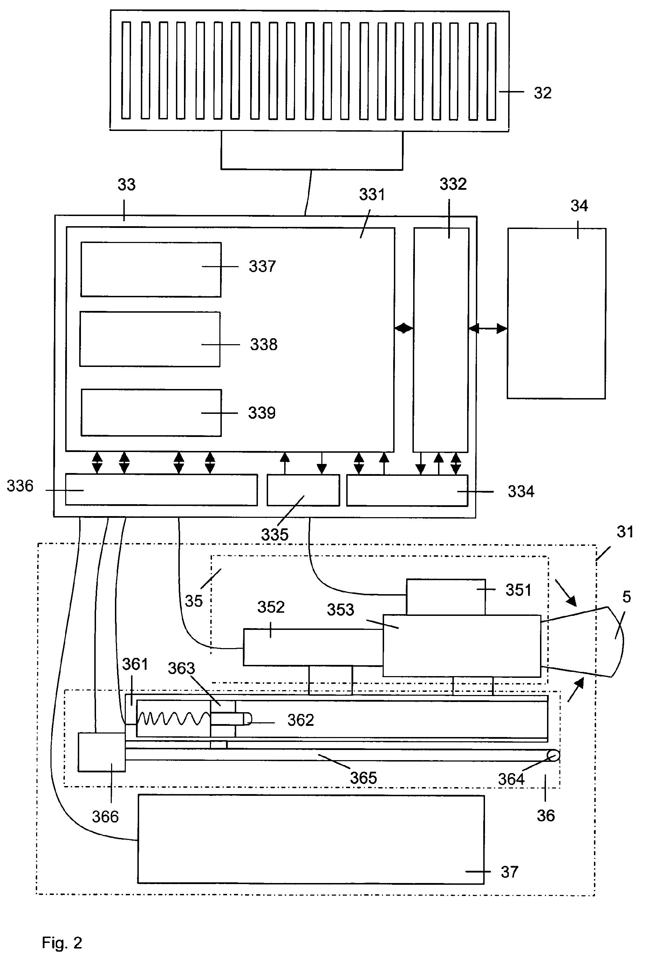

Fig. 2 shows the phased array antenna 32, the laser communication unit 31 and two control units 33 and 34.

The phased array antenna 32 comprises a plurality of antenna elements used to transmit or receive a radio frequency signal. Preferably, the phased array antenna 32 comprises a first set of antenna elements used to form a transmitting antenna and a second set of antenna elements used to form a receiving antenna. Further, the phased array antenna 32 comprises an electronic to detect an anzimuth of the received antenna signal upon amplitude differences or phase differences between signals respectively received by the plural receiving antenna elements. Further, this electronic may shape the form of the transmitted radio frequency signal by controlling the phase and the amplitude differences applied to transmitting antenna elements.

But, it is also possible to have a phased array antenna solely comprising a plurality of receiving antenna elements and a separate transmitting antenna having an omni-directional broadcasting characteristic.

The laser communication unit 1 comprises a laser transmission unit 35, a laser receiving unit 36 and an actuator unit 37. The laser transmission unit 35 and the laser receiving unit 36 are mechanically connected with each other. The assembly formed by the laser transmission unit 35 and the laser receiving unit 36 is movable connected with the chassis of the robot 3, for example movable connected with a support provided by the communication mast of the robot 3. For example, the assembly is pivoted or spherical seated. Further, it is possible that the assembly is turnable connected with a first support which itself is turnable connected with a second support attached to a communication mast of the robot 3. This makes it possible to turn the assembly in two planes, e.g. in a horizontal and a vertical plane.

But it is also possible to implement a three or more dimensional axis control.

The actuator unit 37 has an electric motor or an hydraulic system enabling the control unit 33 to change the direction the assembly is pointing to. Preferably, the assembly formed by the laser transmission unit 35 and the laser receiving unit 36 is free to move in three dimensions wherein the actuator unit 37 has a first actuator to turn the assembly in a first plane and a second actuator to turn the assembly in a second plane.

The laser transmission unit 35 comprises a laser 352, a laser beam focusing and defocusing unit 353 and an actuator 351 connected with the laser beam focusing and defocusing unit 353.

The laser 352 is, for example, constituted by a laser amplifier and a laser diode. The laser focusing and defocusing unit 353 is a combination of convex mirrors and optics or a combination of several lenses arranged to focus/defocus the output laser beam 5. The actuator 351 has an electric motor for moving one or several of these lenses and/or mirrors for focusing/defocusing the laser beam 5.

The laser receiving unit 36 comprises a sleeve 361, a detector element 362 mounted on a support 363, an actuator 366, a guide roller 364 and a drive belt 365. The assembly formed by the support 363 and the detector element 362 is movable engaged in the sleeve 361. Further, the support 363 is connected with the drive belt 365 powered by the actuator 366. The actuator 366 has an electromotor controlled by the control unit 33 which drives the drive belt 365 looped at the front end of the sleeve 361 by the guide roller 364. Thereby, the control unit 33 is in a position to bi-directionally shift the detector element 362 between the rear end and the front-end of the sleeve 361.

It is also possible to shift the detector element 362 by a mechanical system different from the system shown in Fig. 2. For example, a pneumatic, hydraulic or trim control mechanism may be used.

Preferably, the detector element 362 is a photo diode or a photo transistor adapted to the wavelengths of the laser 362.

The control unit 33 may be formed by a control device separated from the control device of the robot 3 and constituted by a microprocessor, a memory device, a plurality of peripheral components interlinked with the memory device and the microprocessor via a processor bus and software programs executed by the microprocessor. But, it is also possible that the control unit 33 is not formed by a separate electronic assembly but is an integrated part of the control unit of the robot 3.

The control unit 34 is a control unit of the robot 3 which intends to communicate by the communication service provided by the communication system composed of the laser communication unit 31, the phased array antenna 32 and the control unit 33.

The functionalities of the control unit 31 are provided by the execution of the software programs of the control unit 33 based on the aforementioned hardware platform of the control unit 33. From functional point of view, the control unit 33 comprises driver elements 336, 335 and 334, a communication handler 332 and a communication setup and maintain unit 331.

The driver element 336 provides necessary functionalities for communicating with the actuators 37, 366 and 351. For example, the driver element 336 comprises controllers and amplifiers for feeding and controlling the server motors of the actuators 37, 366 and 351. A first controller controls the turning of the assembly formed by the laser transmission unit 35 and the laser receiving unit 36 in a first, horizontal plane, a second controller controls the turning of this assembly in a second, vertical plane, a third controller controls the shift position of the detector element 362 and a fourth controller controls the focusing/defocusing level of the laser beam 5. The connection setup and maintain unit 331 sets the respective target values of off-axis angels, shift position and focusing/defocusing forming the basis of the adjustment executed by these controllers.

The driver 335 provides functionalities to communicate with the phased array antenna 32 and to control the antenna functionalities. It comprises amplifiers and controllers for setting the details of a search RF signal (RF = Radio Frequency) broadcasted by the phased array antenna 32. Further, it comprises an electronic circuit for calculating the direction of the source of a search signal received by the phased array antenna 32 based on data submitted by the phased array antenna 32.

The driver 334 comprises amplifiers and controllers for evaluating the signals from the detector element 362 and for feeding and controlling the laser 352. The driver element 334 provides these data to both, to the connection setup and maintain unit 331 and to the communication handler 332.

The communication handler 332 controls the exchange of data over the communication connection provided by the communication system. It comprises functionalities for handling the communication protocols used on the free-space optical interface and for interfacing the control unit 34. If the establishment of a communication connection is requested by the control unit 34, it sends a respective command message to the communication setup and maintain unit 331. Further, the communication setup and maintain unit 331 inform the communication handler 332 about the status of a communication connection and about the data rate and bandwidth available via the free-space optical transmission interface.

The communication setup and maintain unit 331 controls the setup and maintain of the communication connections provided by the communication system. According to the embodiment shown by Fig. 2, the communication system is equipped with one laser communication unit 31 and is consequently in a position to establish one bi-directional communication connection with another robot or with a robot control device. But, it is also possible that the communication system comprises two or more of such laser communication units and may be therefore in a position to establish two or more bi-directional communication connections. In this case, the control unit 33 comprises one further set of drivers 336 and 334 for each additional laser communication unit.

From functional point of view, the communication setup and maintain unit 331 comprises a rough matching algorithm 337 for performing a rough adjustment of the laser communication unit 31, a fine matching algorithm 338 for performing a fine adjustment of the laser communication unit 31 and a connection maintaining algorithm 339 for maintaining an established communication connection. For establishing a communication connection, the communication setup and maintain unit 331 executes in a first step a rough matching procedure by help of the rough matching algorithm 337 and in a second step a fine matching procedure by means of the fine matching algorithm 338. After setup of a communication connection, the connection setup and maintain unit 331 executes a communication connection maintain procedure by help of the communication connection maintain algorithm 339. If the communication connection maintain algorithm 339 detects the breakdown of a communication connection, e.g. caused by a downfall of the robot, it initiates a restart of the connection setup procedure.

To be able to communicate with each other, laser communication units of the robot 3 and the robot 2 have to directly point to each other. To achieve such orientation of the laser communication units, both sides have to execute the procedure described in the following by hand of the procedure executed by the connection setup and maintain unit 331:

In case of loss of communication or during start-up, the communication setup and maintain unit 331 executes the rough matching algorithm 337. In this phase, the phased array antenna 32 sends a search signal in the environment. The searched signal may comprise low frequency information like the address of the searched communication robot and/or the own address of the robot 3. Further, the phased array antenna scans for search signals broadcasted by another robot or a robot control device. The phased array antenna 32 receives and detects a search signal, for example from the robot 2, by analyzing the output signal of the phased array antenna 32, the connection setup and maintain unit 331 determines the rough direction of the source of these search signals, that means the rough direction of the robot 2.

After having executed the rough matching algorithm 337 and knowing the rough direction of the robot 2, the connection setup and maintain unit 331 executes the fine matching algorithm 338:

The laser communication unit 31 is turned in the direction determined by the rough matching algorithm 337. In parallel, the laser beam of the laser transmission unit 37 is defocused to speed up the fine matching procedure executed by the robot 2. In parallel, the detector element 362 is shifted in the front-end position of the sleeve 361 to receive the defocused laser beam from the robot 2 even under bad alignment conditions.

Dependent on the quality of the direction estimation performed by the rough matching algorithm 337, the connection setup and maintain unit 331 has to vary the orientation of the laser communication unit 31, before detecting a laser beam signal from the robot 2. If the algorithm 337 provides a high quality of direction estimation, the detector element 362 immediately detects the defocused laser beam of the robot 2 when pointing in the direction set by the rough matching algorithm 337. Is there a difference in elevation between the robots 2 and 3, a great distance between the robots 2 and 3 or other weaking of the radio frequency base direction estimation, the fine matching algorithm 338 varies the orientation of the laser communication unit 31 around the estimated direction according to a search pattern. This pattern might be a random pattern or a preset pattern prearranged between the robots 2 and 3.

As soon as the fine matching algorithm 338 has detected a laser beam signal from the robot 2, it executes following procedure:

The direction of the communication unit 31 is slightly modified in order to find a maximum laser beam signal. That is done by a closed loop algorithm varying the direction of the communication unit in one or the other direction, measuring the amplitude of the laser signal received by the laser receiving unit 36 and selecting the direction with a local maximum of the laser beam signal. Then, the fine matching algorithm 338 modifies the focusing of the laser beam 5 and shifts the detection element 362 a little bit more to the rear of the sleeve 361. Then, it starts again to determine the direction with a local maximum of the received laser beam signal. By such an iterative process, the laser beam 5 will be more and more focused and the detector element 362 will be more and more shift to the rear of the sleeve 361, until a maximum of the laser beam signal is detected.

Then, it informs the communication handler 332 about the successful established communication connection and assigns the control to the communication connection maintain algorithm 339.

The communication connection maintain algorithm 339 monitors the amplitude level of the output signal provided by the laser receiving unit 36. When detecting a decrease of signal level, for example in case of moving of the robot 2 or the robot 3, it successively shifts the detector element 362 in the front-end position, defocuses the laser beam and performs in the following the aforementioned iterative process. E.g. it slightly modifies the direction of the laser communication unit 31 to find a maximum laser beam signal level, successively shifts the detector element 362 to the rear-end and successively focusing the laser beam 5 to keeping a high data rate. Thereby, the robots 2 and 3 tracks each other by focusing/defocusing the laser beam and turning the laser communication unit 31.

## Claims

1. Method of establishing a communication connection (41, 42) between a versatile first object (2), in particular a robot, and a versatile or fixed second object (1, 3) in particular a further robot or a robot control device, wherein the first object (2) and the second object (1, 3) using laser transmission and receiving units (11, 21, 22, 31 ) for exchanging data encoded in a laser beam (5) emitted by a laser transmission unit and received by a laser receiving unit,
**characterized in**
**that** the method comprises the steps of:
executing in a first step a rough matching procedure (337) performing rough adjustment of the mutual orientations of the laser transmission unit and the laser receiving unit; and
executing in a second step a fine matching procedure (338) performing fine adjustment of the mutual orientations of the laser transmission unit and the laser receiving unit by means of analyzing an output signal of the laser receiving unit.

2. The method of claim 1,
**characterized in**
**that** the rough matching procedure (337) performs rough adjustment of the mutual orientations of the laser transmission unit and the laser receiving unit by means of analyzing an output signal of a phased array antenna (12, 23, 32), wherein the phased array antenna (23) scans for a broadcasted search signal and determines the rough direction of the source of the search signal.

3. The method of claim 2,
**characterized in**
**that** the first phased array antenna (23) broadcasts a search signal including identity information, in particular the address of a searched robot and the own address.

4. An optical communication system, in particular an optical communication system installed in a robot (3), for communicating between a versatile object (3) and a versatile or fixed object (1, 2), in particular between a robot and a robot control device,
**characterized in**
**that** the communication system comprises a laser communication unit (31) comprising a laser transmission unit (35) for emitting a laser beam (5) containing encoded information and a laser receiving unit (36) for receiving such laser beam, and that the communication system comprises a control unit (33) for establishing communication connections (42), wherein the control unit (33) is adapted to execute in a first step a rough matching procedure (337) performing rough adjustment of the orientation of the laser transmission and receiving units (35, 36), and to execute in a second step a fine matching procedure (338) performing fine adjustment of the laser transmission and receiving units (35, 36) by means of analyzing an output signal of the laser receiving unit (35).

5. The optical communication system of claim 4,
**characterized in that** the laser transmission unit (35) and the laser receiving unit (36) are fixed to each other.

6. The optical communication system of claim 4,
**characterized in**
**that** the laser communication unit comprises at least one actuator (37) for changing the orientation of the laser transmission and receiving units (35, 36).

7. The optical communication system of claim 4,
**characterized in**
**that** the laser transmission unit has a laser beam focusing and defocusing unit (353).

8. The optical communication system of claim 7,
**characterized in**
**that** the control unit (31) is adapted to defocus the laser beam at the beginning of the fine matching procedure (338), to vary the orientation of the laser transmission and receiving units (35, 36) in various directions, and, when having detected a laser beam signal, to slightly modify the direction of the laser transmission and receiving units (35, 36) in order to find a maximum laser beam signal.

9. The optical communication system of claim 4,
**characterized in**
**that** the laser receiving unit (36) comprises a sleeve (361), a detector element (362) movable engaged in the sleeve (361) and an actuator (366) for shifting the detector element (362) within the sleeve (361).

10. The optical communication system of claim 9,
**characterized in**
**that** the control unit (33) is adapted to shift the detector element (362) successively to the rear end position of the sleeve (361) when executing the fine matching procedure (338).
